# EUROPEAN PATENT APPLICATION

(11) **EP 3 399 765 A1**
(43) Date of publication of application: **07.11.2018**
(21) Application number: 17756792.2
(22) Date of filing: 22.02.2017
(51) Int. Cl.: H04N 21/84, H04N 21/8405, H04N 21/8549, G06K 9/00, H04N 21/258, H04N 21/44, H04N 21/442, H04N 21/658, H04N 21/482, H04N 21/25

(54) **METHOD AND DEVICE FOR RECOGNISING CONTENT**

(30) Priority: 26.02.2016 KR 20160023639; 13.06.2016 KR 20160073214
(71) Applicant: Samsung Electronics Co., Ltd., Suwon-si, Gyeonggi-do 16677 (KR)
(72) Inventor: KIM, Sang-ha, Seoul 05510 (KR); CHANG, Tae-kwon, Seoul 05747 (KR); KIM, Sung-jin, Yongin-si Gyeonggi-do 17095 (KR); KIM, Il-koo, Seongnam-si Gyeonggi-do 13600 (KR); PARK, Sung-kweon, Suwon-si Gyeonggi-do 16704 (KR); PARK, Young-o, Seoul 06767 (KR); JANG, Won-young, Anyang-si Gyeonggi-do 14068 (KR)
(74) Representative: Appleyard Lees IP LLP
(86) International application number: PCT/KR2017/001933
(87) International publication number: WO 2017/146454

(57) **Abstract**

A device is provided, wherein the device captures a screen the device when a control signal for controlling one or more pieces of content provided to the device is received, and, when a captured screen corresponds to a template screen, extracts a character string including content information from a preset area of the captured screen, compares the extracted character string with one or more pieces of text included in a preset meaning recognition model, detects text corresponding to the content information, and recognizes content displayed on the screen of the device based on the detected text.

## Description

### TECHNICAL FIELD

The present disclosure relates to a method, performed by a device, of identifying content, a method, performed by a server, of identifying content, a device for identifying content, and a server for identifying content.

### BACKGROUND ART

To provide an advertisement customized to meet individual needs of various consumers, an advertisement provider needs to know what content a user is consuming.

A conventional fingerprint-based content recognition technology extracts a fingerprint from video or audio of content currently being reproduced by a display device, such as a TV, transmits the extracted fingerprint to a server, and matches the transmitted fingerprint with reference data of a database of the server to recognize content. Based on these results, it is possible to analyze the content consumption or the viewing pattern of the display device, and an advertiser may effectively provide a customized advertisement based on an analysis result.

However, the fingerprint-based content recognition technology causes additional computation or a data transfer load during a process of extracting a fingerprint from content displayed on the display device and transmitting the fingerprint to the server, as well as a large economical load by additional hardware, such as a need to operate a separate database server and a matching server. Accordingly, a need has arisen for a technology capable of quickly and easily detecting information about content being reproduced by the display device.

### DESCRIPTION OF EMBODIMENTS

### TECHNICAL PROBLEM

Provided are a method of controlling a device for providing content capable of more efficiently acquiring information of content being viewed by a user of the device, by acquiring the information of the content being viewed by the user through a captured screenshot of the device, the device, and a server.

### SOLUTION TO PROBLEM

According to an aspect of the present disclosure, a device is disclosed, wherein the device captures a screen of the device when a control signal for controlling one or more pieces of content provided to the device is received, and, when a captured screenshot corresponds to a template screenshot, extracts character string including content information from a predetermined area of the captured screenshot, compares the extracted character string with one or more pieces of text included in a predetermined meaning recognition model, detects text corresponding to the content information, and recognizes content displayed on the screen of the device on the basis of the detected text.

### BRIEF DESCRIPTION OF DRAWINGS

FIG. 1 is a conceptual diagram illustrating a system for recognizing content, according to an embodiment.
FIG. 2 is a flowchart for explaining a method of controlling a device for providing content, according to an embodiment.
FIGS. 3A to 3C are diagrams for explaining a template screenshot provided for each content service providing content.
FIG. 4 is a flowchart for explaining a method, performed by a device for providing content, of extracting content information from a captured screenshot, according to another embodiment.
FIG. 5 is a diagram for explaining a method, performed by a device, of extracting content information from a captured screenshot, according to another embodiment.
FIG. 6 is a flowchart for explaining a method of recognizing content by using a predetermined meaning recognition model, according to an embodiment.
FIG. 7 is a flowchart for explaining a method, performed by a device, of recognizing content using a template screenshot corresponding to a content service, according to an embodiment.
FIG. 8 is a flowchart for more specifically explaining a method, performed by a device, of recognizing content, according to an embodiment.
FIGS. 9A to 9D are diagrams for explaining a method, performed by a device, of recognizing content by using a meaning recognition model, according to an embodiment.
FIGS. 10A and 10B are block diagrams of a device for recognizing content, according to an embodiment.
FIG. 11 is a flowchart for explaining a method, performed by a meaning recognition server, of recognizing content provided to a device, according to an embodiment.
FIG. 12 is a block diagram illustrating a meaning recognition server that recognizes content provided to a device, according to an embodiment.
FIG. 13 is a conceptual diagram for explaining a system that recognizes content displayed on a device, according to an embodiment.
FIG. 14 is a block diagram for explaining in more detail an operation of a meaning recognizer included in a processor of a meaning recognition server, according to an embodiment.
FIG. 15 is a block diagram for explaining in more detail an operation of a content data management module included in a meaning recognizer of a meaning recognition server, according to an embodiment.
FIG. 16 is a diagram for explaining a method, performed by a meaning recognition server, of processing a text that is a basis of a meaning recognition model based on content data of a text form, according to an embodiment.

### BEST MODE

According to an aspect of the present disclosure, a method performed by a device of recognizing content includes capturing a screen of the device when a control signal for controlling one or more pieces of content provided to the device is received, and, when a captured screenshot corresponds to a template screenshot, extracting text including content information from a predetermined area of the captured screenshot, comparing the extracted text with one or more pieces of text included in a predetermined meaning recognition model, detecting text corresponding to the content information, and recognizing content displayed on the screen of the device on the basis of the detected text.

According to another aspect of the present disclosure, a method, performed by a server, of recognizing content includes, when a captured screenshot of a device corresponds to a template screenshot, receiving text including content information extracted from the captured screenshot from the device; detecting a text corresponding to the extracted content information by comparing the received text with at least one text included in a predetermined meaning recognition model; and recognizing content displayed on a screen of the device based on the detected text.

The method may further include receiving voice data of a user who views content of the device, wherein the recognizing of the content comprises: recognizing the content displayed on the screen of the device based on the detected text and the received voice data of the user.

The method may further include acquiring content data from an external server at a predetermined cycle, and a meaning recognition model is updated based on the content data acquired at the predetermined cycle.

The method may include acquiring additional information including at least one of information about a user viewing at least one piece of content, information of a device, viewing time of at least one piece of content to be recognized, recognition information of a content service providing the at least one piece of content, and size information of each character in a character string including the content information.

The detecting of the text may include calculating a probability value that each of the at least one text corresponds to the extracted content information by comparing the extracted content information with the at least one text; and detecting any one of the at least one text based on the calculated probability value.

The method may further include, when the detected text does not exist, receiving, from the device, a character string comprising the content information extracted from another captured screenshot corresponding to the template screenshot.

The recognizing of the content may further include changing information of the extracted content information, which does not correspond to the detected text, based on the detected text.

The method may further include transmitting a result of recognizing the content to a viewing pattern analysis server

The method may further include receiving, from the viewing pattern analysis server, viewing pattern history information of a user of the device generated by the viewing pattern analysis server based on the result.

According to another aspect of the present disclosure, a device includes a communicator configured to receive at least one piece of content; a display configured to display any one of the at least one piece of content; and a processor configured to capture a screen of the device when a control signal for controlling the at least one piece of content is received, when a captured screenshot corresponds to a template screenshot, extract a character string comprising content information from a predetermined area of the captured screenshot, compare the extracted character string with at least one text included in a predetermined meaning recognition model, detect a text corresponding to the content information, and recognize content displayed on the screen of the device based on the detected text.

According to another aspect of the present disclosure, a server for recognizing content includes a communicator configured to, when a captured screenshot of a device corresponds to a template screenshot, receive a character string comprising content information extracted from the captured screenshot from the device; and a processor configured to compare the received content information with at least one text included in a predetermined meaning recognition model to detect a text corresponding to the content information, and recognize content displayed on a screen of the device based on the detected text.

The communicator may be further configured to receive voice data of a user who views content of the device, and the processor may be further configured to recognize the content displayed on the screen of the device based on the detected text and the received voice data of the user.

The communicator may be further configured to acquire content data from an external server at a predetermined cycle, and a meaning recognition model may recognize content updated based on the content data acquired at the predetermined cycle.

The communicator may be further configured to acquire additional information including at least one of information about a user viewing at least one piece of content, information of a device, viewing time of at least one piece of content to be recognized, recognition information of a content service providing the at least one piece of content, and size information of each character in a character string including the content information.

The processor may be further configured to compare the extracted content information with the at least one text and calculate a probability value that each of the at least one text corresponds to the extracted content information, and detect any one of the at least one text based on the calculated probability value.

When the detected text does not exist, the processor may be further configured to receive a character string comprising the content information extracted from another captured screenshot corresponding to the template screenshot from the device.

The processor may be further configured to change information of the extracted content information, which does not correspond to the detected text, based on the detected text.

The communicator may be configured to transmit a result of recognizing the content to a viewing pattern analysis server.

The communicator may be configured to receive viewing pattern history information of the user of the device generated by the viewing pattern analysis server from the viewing pattern analysis server based on the result of recognizing the content.

### MODE OF DISCLOSURE

Terms used in this specification will now be briefly described before describing embodiments in detail.

Although the terms used in the disclosure have been described in general terms that are currently used in consideration of the functions referred to in the disclosure, they are intended to encompass various other terms depending on the intent of those skilled in the art, precedents, or the emergence of new technology. Accordingly, the terms used in the disclosure are not defined based on the meaning of the term, not on the name of a simple term, but on the contents throughout the disclosure.

It will be understood that the terms "comprises", "comprising", "includes" and/or "including", when used herein, specify the presence of stated elements, but do not preclude the presence or addition of one or more other elements. The term "unit" or "module" is used to denote an entity for performing at least one function or operation, and may be embodied as a software element or a hardware element or a combination of hardware and software.

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. In the following description, for clarity, parts or elements that are not related to the embodiments are omitted.

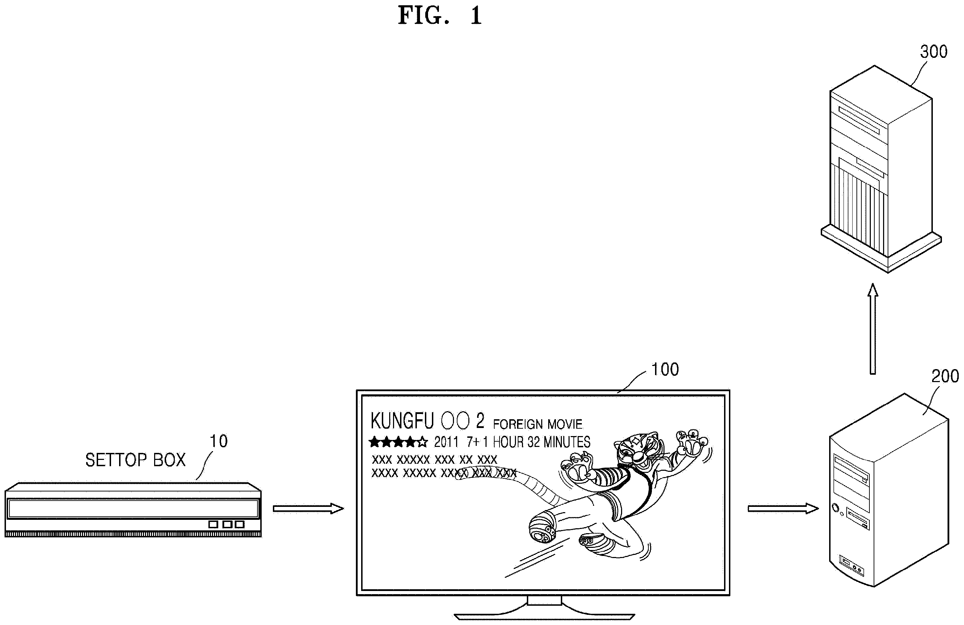

FIG. 1 is a conceptual diagram illustrating a system for recognizing content according to an embodiment.

As shown in FIG. 1, a device 100 may be a TV, but this is merely an example and may be implemented in an electronic device that includes a display. For example, the device 100 may be implemented as a variety of electronic device such as a mobile phone, a tablet PC, a digital camera, a camcorder, a laptop computer, a tablet PC, a desktop, an electronic book terminal, a digital broadcasting terminal, a PDA (Personal Digital Assistants) Player, navigation, an MP3 player, a wearable device, and the like. In particular, the embodiments may be easily implemented in a display device having a large display such as a TV, but are not limited thereto. Also, the device 100 may be a fixed or mobile type, and may be a digital broadcast receiver capable of receiving digital broadcasting.

The device 100 according to an embodiment may be provided with a content service through a set-top box 10. For example, the content service may include a real-time broadcast content service providing a terrestrial broadcast signal, a cable broadcast set-top box, an IPTV set-top box, or the like, as well as a content service in the form of a web application such as Netflix or YouTube, but the content service is not limited thereto.

The device 100 according to an embodiment may receive at least one piece of content from a service providing device 10. The device 100 may display content selected by a user of the device 100 among the received at least one piece of content on a screen of the device 100. For example, the user of the device 100 may send a control signal to control at least one piece of content provided by the device 100. In this regard, the control signal may include a remote control signal, a touch signal of a smart phone and a wearable device, a voice command, a gesture recognition signal, a composite sensor signal, and the like, but this is only an example, and the control signal is not limited thereto.

The device 100 according to an embodiment may capture a screen of the device 100 on which content is displayed when the control signal is received. For example, the device 100 may capture the screen of the device 100 on which the content is displayed on a predetermined time basis when the control signal is received.

Also, the device 100 may determine whether a pre-stored template screenshot and the captured screenshot correspond to each other. In this regard, on the template screenshot, information about a text area on which information about content is displayed on the screen may be previously set. Also, the template screenshot may differ according to a type of the content service that transmits the content to the device 100. For example. A template screenshot for a content service A and a template screenshot for a content service B may be different from each other.

Meanwhile, the device 100 confirms the type of the content service and selects a template of the previously confirmed content service. The device 100 may repeatedly perform an operation of capturing the screen on which the content is displayed until a screenshot corresponding to the selected template screenshot is captured. The device 100 may stop the operation of capturing the screen of the device 100 when the screenshot corresponding to the template screenshot is captured.

The device 100 may extract a character string including the content information from a predetermined area on the captured screenshot corresponding to the template screenshot. The predetermined area is an area including content information such as a title name or a channel name of content. In this regard, the content information may be displayed in a text form. The device 100 may recognize the text displayed on the predetermined area and extract the character string including the content information. For example, the device 100 may read text on the predetermined area of the captured screenshot using an OCR (Optical Character Reader) to extract information about a type, title, and genre of the content.

Also, the device 100 may transmit the extracted character string to a meaning recognition server 200. The meaning recognition server 200 according to an embodiment may recognize content that the user of the device 100 views based on the character string received from the device 100.

Meanwhile, according to another embodiment, the device 100 may detect a text corresponding to the content information by comparing the character string including the content information with at least one text included in a predetermined meaning recognition model. Also, the device 100 may recognize the content displayed on the screen of the device 100 based on the detected text. The device 100 may further improve the accuracy of content recognition by using the predetermined meaning recognition model.

The meaning recognition server 200 according to an embodiment may recognize the content by comparing the received meaning recognition model with a predetermined character string. For example, the meaning recognition server 200 may select the text corresponding to the content information included in the received text from among at least one text included in the predetermined meaning recognition model. The meaning recognition server 200 may recognize the content using the selected text. In this regard, the selected text may be text representing at least one of, for example, a title of the content and a type of a channel by which the content is provided.

The meaning recognition server 200 according to an embodiment may transmit a content recognition result to a viewing pattern analysis server 300. The viewing pattern analysis server 300 may determine a viewing pattern of the user by acquiring the content recognition result from the meaning recognition server 200 for a predetermined period of time and analyzing the acquired content recognition result.

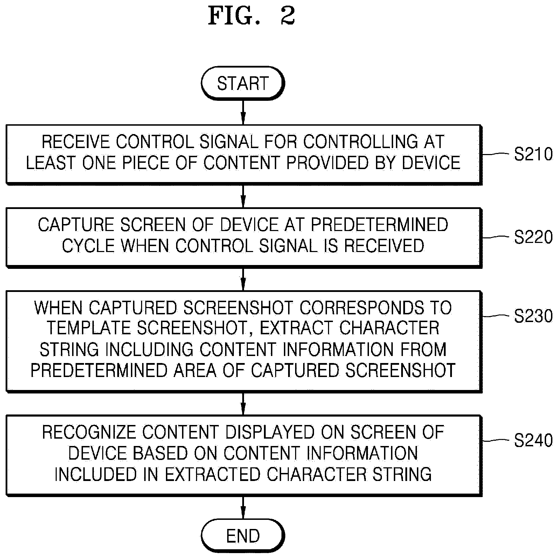

FIG. 2 is a flowchart for explaining a method of controlling the device 100 for providing content (hereinafter, the device 100) according to an embodiment.

In operation S210, the device 100 receives a control signal for controlling at least one piece of content provided by the device 100.

The device 100 according to an embodiment may receive the control signal for controlling the at least one piece of content provided by the device 100 from an input device. For example, the device 100 may receive the control signal for controlling the at least one piece of content provided by the device 100 from a remote control. In this regard, the control signal may be one of a channel change signal of the device 100, a power on signal of the device 100, a connection signal between another device and the device 100, a menu selection signal of the device 100, and a request signal of at least one piece of content information.

In operation S220, the device 100 captures a screen of the device 100 at a predetermined cycle when the control signal is received.

The device 100 according to an embodiment may capture the screen of the device 100 on which the content is displayed when the control signal is received. In this regard, on the screen of the device 100, at least one of a title name of the at least one piece of content provided by the device 100, a channel name, a content list, content related additional information, and a user interface recognition for selecting content may be displayed, but this is only an embodiment, and information displayed on the screen of the device 100 is not limited thereto.

Also, the device 100 according to an embodiment may repeatedly capture the screen of the device 100 according to a predetermined cycle. For example, the device 100 may capture the screen of the device 100 at an interval of 2 seconds from a time when the control signal is received.

In operation S230, when the captured screenshot corresponds to a template screenshot, the device 100 extracts a character string including the content information from a predetermined area of the captured screenshot. In this regard, the template screenshot may differ according to a type of a content service providing the at least one piece of content to the device 100. Also, information about an area on which content information provided by a specific content service is displayed may be previously set in the template screenshot. For example, in the case of a template screenshot for an A content service, information that the content information is displayed in an upper left of the screen may be previously set.

The device 100 according to an embodiment may stop an operation of capturing the screen when the captured screenshot corresponds to the template screenshot. The screenshot corresponding to the template screenshot may be a screenshot on which at least one of an image and a text is displayed at a position corresponding to a position of at least one of the image and the text displayed on the template screenshot. For example, when a screenshot on which text is displayed is captured at a position corresponding to a predetermined area on the template screenshot, the device 100 may stop the operation of capturing the screen.

The device 100 according to an embodiment may extract a character string including the content information displayed on a predetermined area of the captured screenshot corresponding to the template screenshot.

In operation S240, the device 100 recognizes the content displayed on the screen of the device 100 based on the content information included in the extracted character string.

For example, the device 100 may read the text displayed on the extracted character string using an OCR. In this regard, the content information may include information about a title, a type and a genre of the content, and the like. However, this is an embodiment, and the content information is not limited thereto.

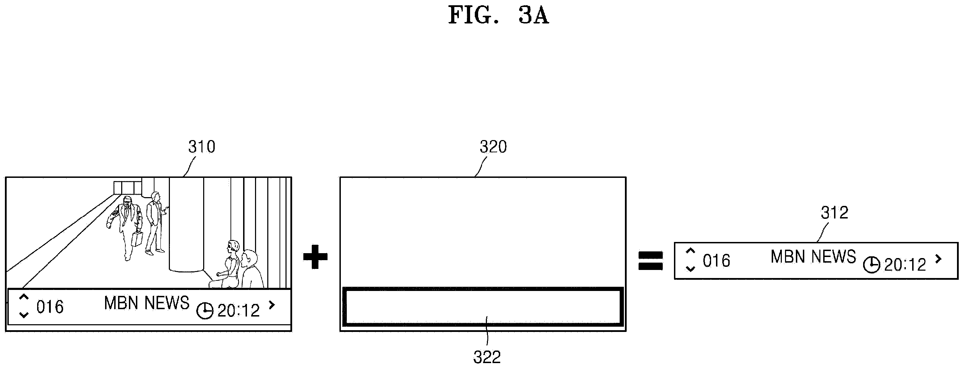

FIGS. 3A to 3C are diagrams for explaining a template screenshot provided for each content service providing content.

Referring to FIG. 3A, when a control signal is received from an input device, the device 100 for providing content (hereinafter, the device 100) may capture a screen at a predetermined cycle until a screenshot 310 corresponding to a template screenshot 320 is captured. In this regard, the device 100 may select the pre-stored template screenshot 320 with respect to an A content service providing the content. In real time broadcasting, abstract information about broadcast channels is often displayed in a bounding box at the bottom of the screen when channels are switched. In this case, the bounding box may be a template of the A content service. Accordingly, the device 100 may periodically matches the captured screenshot to the template of a bounding box format, when the captured screenshot matches the template, extract text 312 from a predetermined content information display area 322 and extract a character string including content information.

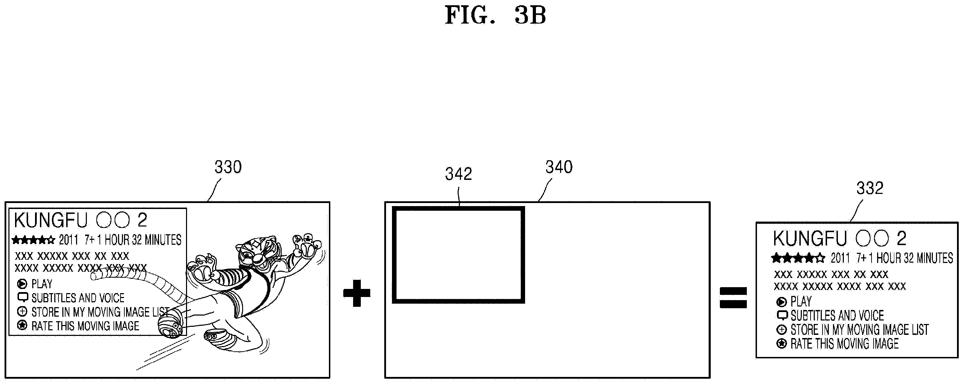

Meanwhile, referring to FIG. 3B, when the control signal is received from the input device, the device 100 may capture the screen according to a predetermined cycle until a screenshot 330 corresponding to a template screenshot 340 is captured. In this regard, the device 100 may select the pre-stored template screenshot 340 with respect to a B content service providing content. A content service such as a web application in a smart TV or a smart phone such as Netflix may have a screenshot having the same UI layout regardless of a type of content to be reproduced. In an embodiment, a template may be generated from a UI layout of the screenshot immediately before the content is reproduced. The template may match with a screenshot periodically captured, and when they match, text is recognized from the predetermined content information display area 342, and a character string including the content information may be extracted.

The device 100 according to an embodiment may extract the text 332 from the upper left corresponding to the content information display area 342 when the captured screenshot 330 matches a template corresponding to a type of the content service. Also, the device 100 may read the extracted text 342 and recognize the content displayed on the device 100.

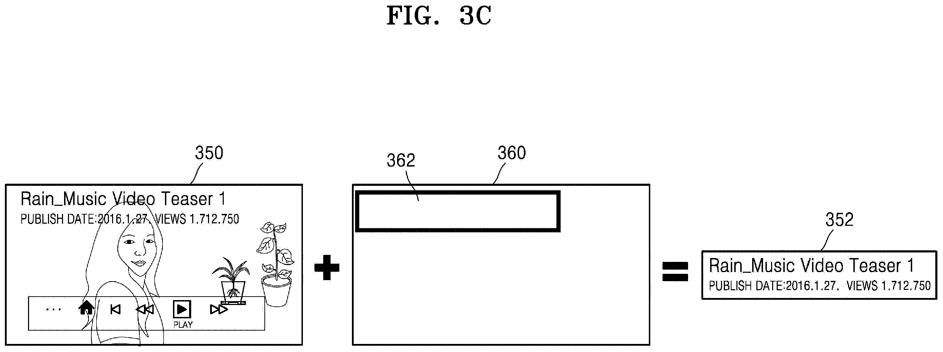

Meanwhile, referring to FIG. 3C, the device 100 may capture the screen according to a predetermined cycle until a screenshot 350 corresponding to a template screenshot 360 is captured when the control signal is received. In this regard, the device 100 may select the pre-stored template screenshot 360 with respect to a C content service providing the content. According to an embodiment, the device 100 may generate a template from a UI layout screen at a particular time point before the content is reproduced. The generated template screenshot 360 may be stored in the device 100. When the control signal is received, the device 100 may match the template screenshot 360 with the screenshot 350 periodically captured, when they match, and extract text from a predetermined content information display area 362 and recognize the content.

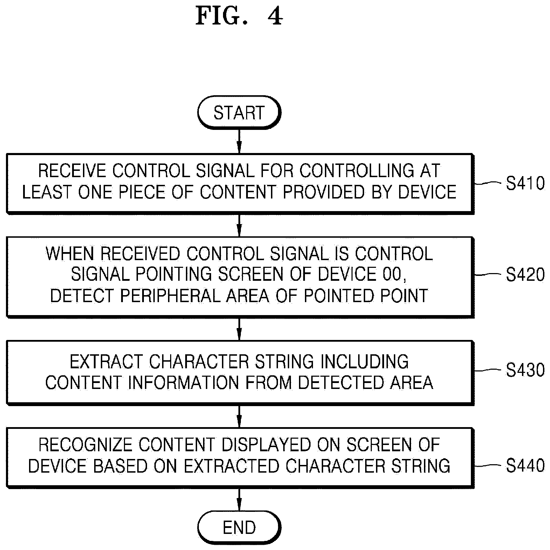

FIG. 4 is a flowchart for explaining a method performed by the device 100 for providing content (hereinafter, the device 100) of extracting content information from a captured screenshot according to another embodiment.

In operation S410, the device 100 may receive a control signal for controlling at least one piece of content provided by the device 100.

In operation S420, when the received control signal is a control signal pointing a screen of the device 100, the device 100 may detect a peripheral area of a pointed point.

The device 100 according to an embodiment may determine whether the received control signal is the control signal pointing the screen of the device 100. The device 100 may detect the peripheral area located within a predetermined range from the pointed point when it is determined that the received control signal is the control signal for pointing the screen of the device 100. In operation S430, the device 100 may extract a character string including the content information from the detected area.

In operation S440, the device 100 may recognize content displayed on the screen of the device 100 based on the extracted character string.

The device 100 according to an embodiment may read text displayed on the extracted character string using a text reading technique such as OCR. However, this is only an embodiment, and the method of recognizing the content based on the character string extracted from the device 100 is not limited to the above-described example.

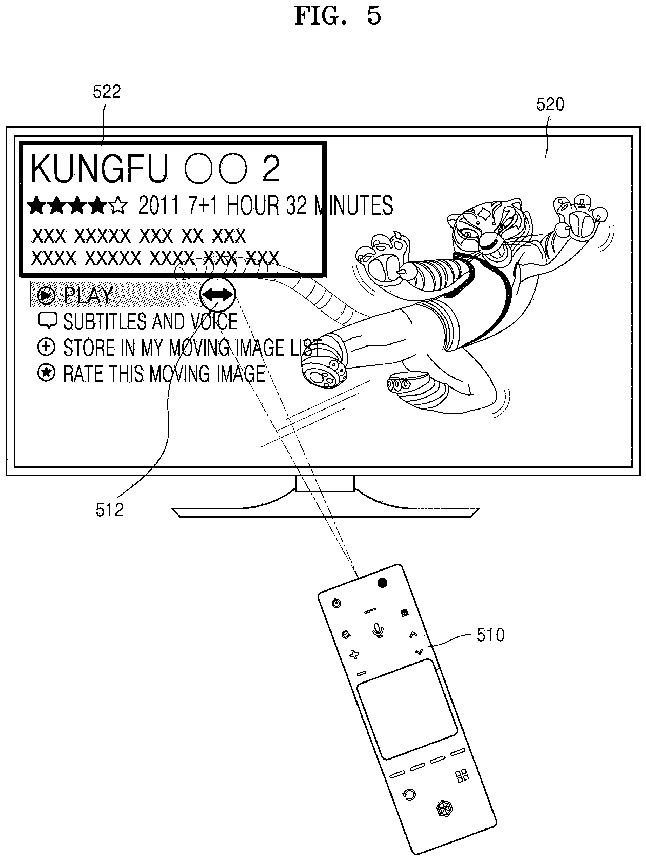

FIG. 5 is a diagram for explaining a method performed by the device 100 of extracting content information from a captured screenshot according to another embodiment.

Referring to FIG. 5, the device 100 according to an embodiment may receive a control signal 512 controlling at least one piece of content provided by the device 100. Also, when the received control signal 512 is a control signal pointing the screen of the device 100, the device 100 may detect a peripheral area 522 located within a predetermined range from a pointed point.

The device 100 according to an embodiment may determine whether the received control signal 512 is the control signal pointing the screen of the device 100. The device 100 may detect the peripheral area 522 located within the predetermined range from the pointed point when it is determined that the received control signal 512 is the control signal for pointing the screen of the device 100.

The device 100 according to an embodiment may read the content information extracted from the detected peripheral area 522 and recognize text indicating information about content. For example, the device 100 may recognize the text indicating the information about the content to confirm that a title of the content is Kungfu 002.

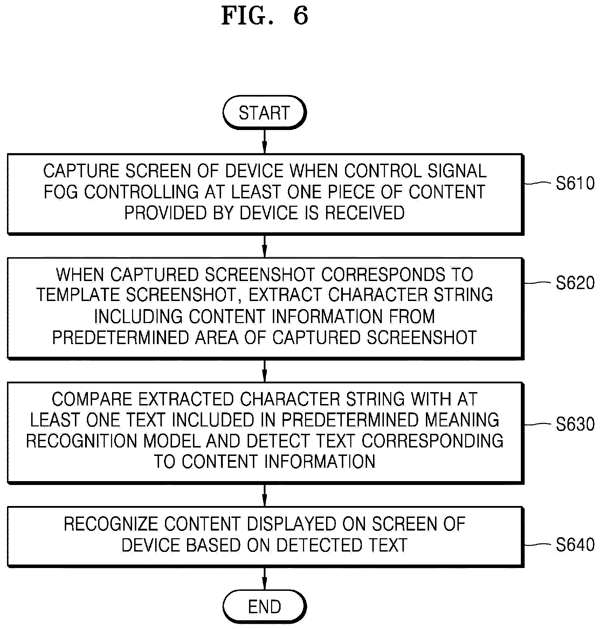

FIG. 6 is a flowchart for explaining a method of recognizing content using a predetermined meaning recognition model according to an embodiment.

In operation S610, the device 100 captures a screen of the device 100 when a control signal for controlling at least one piece of content provided by the device 100 is received.

The device 100 according to an embodiment may receive the control signal for controlling the at least one piece of content. Also, the device 100 may determine a type of a content service providing the at least one piece of content to the device 100, based on the received control signal. In this regard, the type of the content service may be any one of a web-based Video On Demand (VOD) service, a Live service, and an application-based service, but this is only an embodiment. The type of the content service providing the at least one piece of content is not limited thereto. Therefore, a template screenshot may be selected according to the type of the content service, and matching of the template screenshot and the captured screenshot may be performed.

Meanwhile, the device 100 according to an embodiment may capture the screen of the device 100 at a predetermined cycle when the control signal is received. The device 100 may determine whether the captured screenshot corresponds to the template screenshot. In this regard, the template screenshot may differ according to the type of the content service.

In operation S620, when the captured screenshot corresponds to the template screenshot, the device 100 extracts a character string including the content information from a predetermined area of the captured screenshot.

The device 100 according to an embodiment may extract the character string including the content information from an area of the captured screenshot corresponding to an area of the template screenshot on which the content information is displayed. In this regard, the content information may include text, for example, a title of the content and a name or number of a channel by which the content is provided, etc.

In operation S630, the device 100 compares the extracted character string with at least one text included in a predetermined meaning recognition model and detects text corresponding to the content information.

The device 100 according to an embodiment may previously set the meaning recognition model. The meaning recognition model may include at least one text for recognizing the content. For example, the meaning recognition model may include at least one text indicating a title of currently provided content and a name or number of a channel by which the content is provided, etc.

Further, according to another example, the meaning recognition model may be set differently according to a device ID and a user ID. For example, when a user is a female in her twenties, the device 100 may select a meaning recognition model including at least one text indicating a title and a type of a channel of content preferred by the female in her twenties among a plurality of meaning recognition models, etc.

The device 100 according to an embodiment may detect text included in the character string using a predetermined format pattern of the template screenshot from the extracted character string. In this regard, the predetermined format pattern may be included in the meaning recognition model. For example, when the format pattern is set in the order of a channel name and a title name, the device 100 may detect text corresponding to the channel name and the title name from the extracted character string. Meanwhile, according to another example, the at least one text included in the extracted character string of the device 100 may not correspond to the predetermined format pattern of the template screenshot. In this case, the device 100 may detect the text from the character string using a probability model that probabilistically calculates the relationship of peripheral words in the character string. For example, the device 100 may extract text that a name of an actor is A and a name of broadcast is B from a character string that A is a leading actor and B is an exclusive broadcast based on the probability model.

In operation S640, the device 100 recognizes the content displayed on the screen of the device 100 based on the detected text.

The device 100 according to an embodiment may determine the detected text as a title of the content displayed on the screen of the device 100.

Also, the device 100 according to an embodiment may verify the accuracy of the detected text by comparing the detected text among the at least one text included in the predetermined meaning recognition with text having the highest similarity. In this regard, the similarity may be determined according to types of consonants and vowels between the texts, a combination relation thereof, etc. and a matching ratio. For example, when the text included in the content information is Hongpu, the device 100 may detect a Kungfu having the highest similarity among the at least one text included in the meaning recognition model. The device 100 may correct a typographical error, etc included in the received content information by comparing the content information extracted from the captured screenshot with the meaning recognition model and detecting the text from the meaning recognition model.

Further, according to another embodiment, the device 100 may verify the detected text based on received additional information. For example, when Kungfu is detected as the title of the content, the device 100 may verify the detected text by determining whether a viewing time is a time at which Kungfu is broadcasted based on information about the viewing time included in the additional information.

According to another embodiment, the device 100 may verify the detected text based on sensed voice data. For example, while Kungfu is detected as the title of the content, the device 100 may verify the detected text by determining whether the sensed voice data represents Kungfu.

The device 100 according to an embodiment may repeatedly perform operation S1120 described above when it is determined that the detected text is not information suitable for recognizing the content as a result of verifying the detected text. Further, according to another example, the device 100 may request to recapture the screen of the device 100 again.

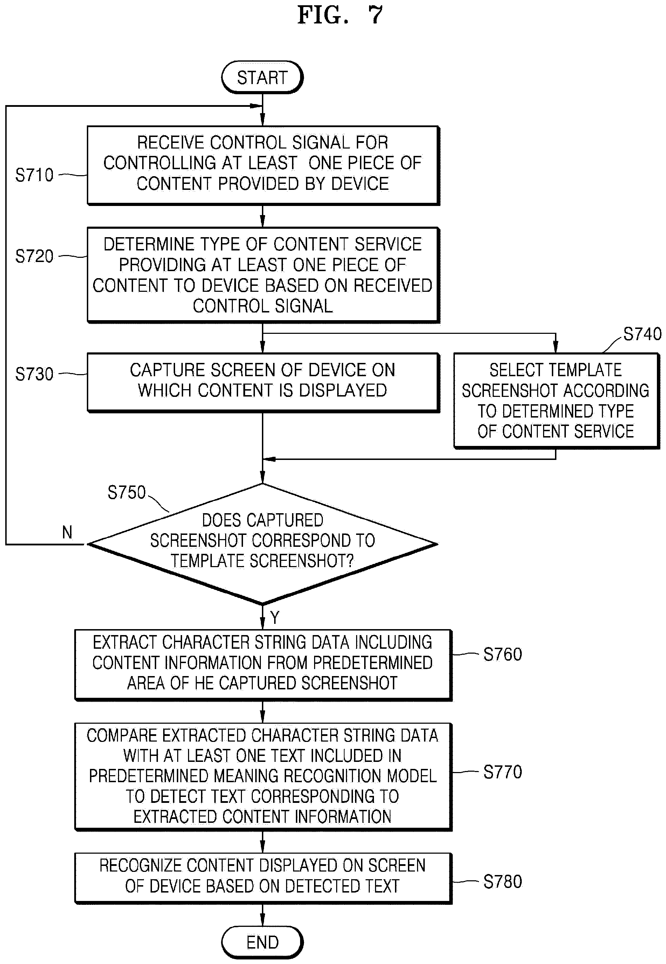

FIG. 7 is a flowchart for explaining a method performed by the device 100 of recognizing content using a template screenshot corresponding to a content service according to an embodiment.

In operation S710, the device 100 may receive a control signal for controlling at least one piece of content provided by the device 100.

In operation S720, the device 100 may determine a type of a content service providing the at least one piece of content to the device 100 based on the received control signal.

The device 100 according to an embodiment may determine the type of the content service providing the at least one piece of content to the device 100 based on the received control signal. In this regard, the type of the content service may be any one of a web-based Video On Demand (VOD) service, a Live service, and an application-based service, but this is only an embodiment. The type of the content service providing the at least one piece of content is not limited thereto.

In operation S730, the device 100 may capture a screen of the device 100 on which content is displayed.

The device 100 according to an embodiment may capture the screen of the device 100 on which the content is displayed when the control signal is received.

In operation S740, the device 100 may select a template screenshot according to the determined type of the content service.

In this regard, the template screenshot may differ according to the type of the content service providing the at least one piece of content to the device 100. For example, according to the type of the content service, an area of the template screenshot on which content information is displayed, size, color, shape, etc. of text constituting the content information may be different.

Meanwhile, although operations S730 and S740 are described in a parallel process for the sake of convenience, each operation may be performed with a temporal relation to each other.

In operation S750, the device 100 may determine whether the captured screenshot corresponds to the template screenshot.

When the captured screenshot does not correspond to the template screenshot, the device 100 may repeatedly perform operations S710 to S740 described above by performing operation S710 described above.

In operation S760, the device 100 may extract character string data including the content information from a predetermined area of the captured screenshot.

The device 100 according to an embodiment may extract the character string data including the content information from the predetermined area of the captured screenshot when the captured screenshot corresponds to the template screenshot.

In operation S770, the device 100 may compare the extracted character string data with at least one text included in a predetermined meaning recognition model to detect text corresponding to the extracted content information.

Meanwhile, operation S770 may correspond to operation S630 described above with reference to FIG. 6.

In operation S780, the device 100 may recognize content displayed on the screen of the device 100 based on the detected text.

Meanwhile, operation S780 may correspond to operation S640 described above with reference to FIG 6.

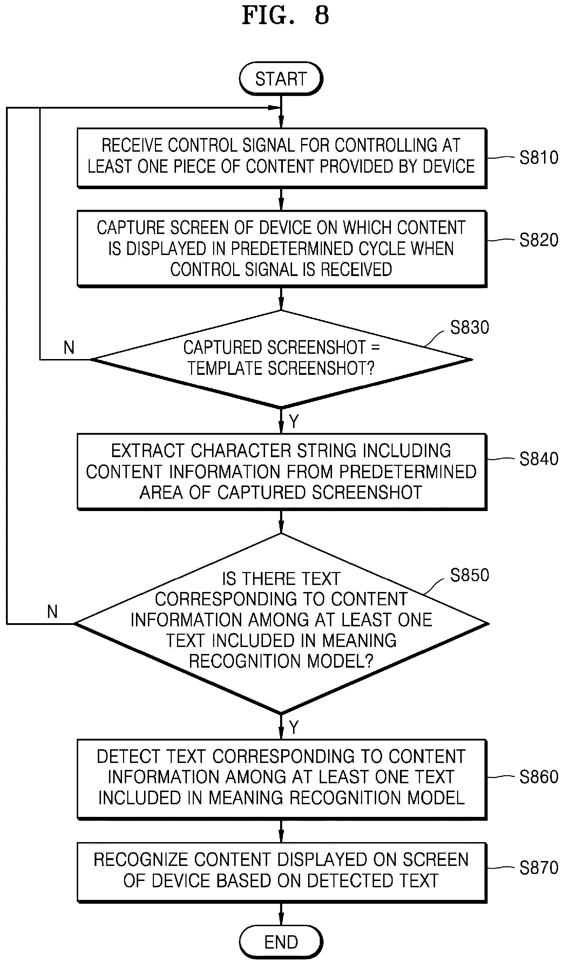

FIG. 8 is a flowchart for more specifically explaining a method performed by the device 100 of recognizing content according to an embodiment.

In operation S810, the device 100 may receive a control signal for controlling at least one piece of content provided by the device 100.

Meanwhile, operation S810 may correspond to operation S210 described above with reference to FIG. 2.

In operation S820, the device 100 may capture a screen of the device 100 on which the content is displayed in a predetermined cycle when the control signal is received.

In operation S830, the device 100 may determine whether the captured screenshot corresponds to a template screenshot.

When the captured screenshot does not correspond to the template screenshot, the device 100 according to an embodiment may repeatedly perform an operation of capturing the screen of the device 100 in operation S810.

In operation S840, the device 100 may extract a character string including content information from a predetermined area of the captured screenshot.

The device 100 according to an embodiment may extract the character string including the content information from the predetermined area of the captured screenshot when the captured screenshot corresponds to the template screenshot. For example, the device 100 may extract text on the captured screenshot from an area corresponding to a predetermined content information display area of the template screenshot.

In operation S850, the device 100 may determine whether there is text corresponding to the content information among at least one text included in a meaning recognition model. Meanwhile, when the text corresponding to the content information is not detected, the device 100 according to an embodiment may repeatedly perform an operation of capturing the screen of the device 100 in operation S720.

In operation S860, the device 100 may detect the text corresponding to the content information among the at least one text included in the meaning recognition model.

Operation S860 may correspond to operation S630 described above with reference to FIG. 6.

In operation S870, the device 100 may recognize content displayed on the screen of the device 100 based on the detected text.

Operation S870 may correspond to operation S640 described above with reference to FIG. 6.

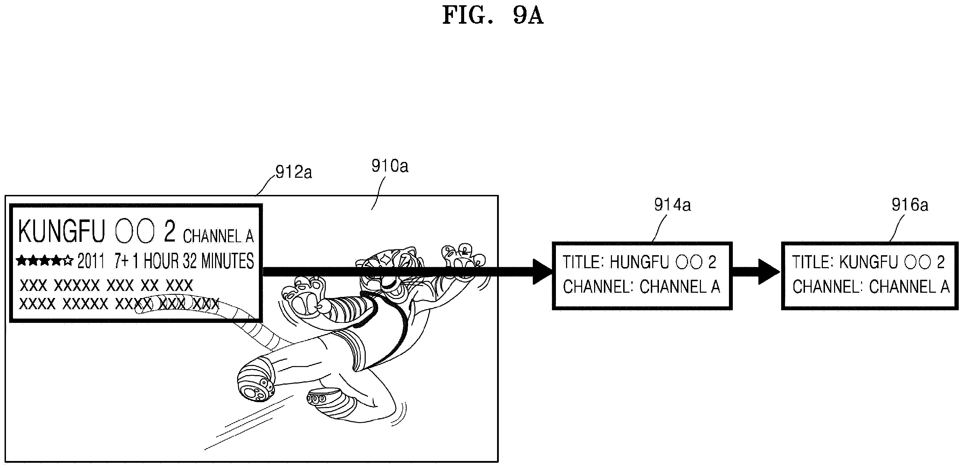

FIGS. 9A to 9D are diagrams for explaining a method performed by the device 100 of recognizing content using a meaning recognition model according to an embodiment.

Referring to FIG. 9A, the device 100 according to an embodiment may receive a control signal for controlling content reproduced in the device 100. The device 100 may determine a template screenshot used for identifying the content as a first template screenshot based on the received control signal.

Meanwhile, the device 100 according to an embodiment may capture a screenshot 910a corresponding to the determined first template screenshot. The device 100 may detect an image 912a including content information from the captured screenshot 910a using the first template screenshot.

The device 100 according to an embodiment may read the detected image 912a and recognize text 914a representing information about the content. Also, the device 100 may use a predetermined meaning recognition model to determine information necessary to identify the content from the recognized text 914a. For example, the device 100 may select text representing a title of content included on the recognized text 914a. Also, the device 100 may compare the recognized text 914a with the predetermined meaning recognition model and correct 'Hongfu' which is determined to be a typographical error, to 'Kungfu'. The device 100 may determine a type of a channel and a title of the content based on text 916a in which the typographical error is corrected.

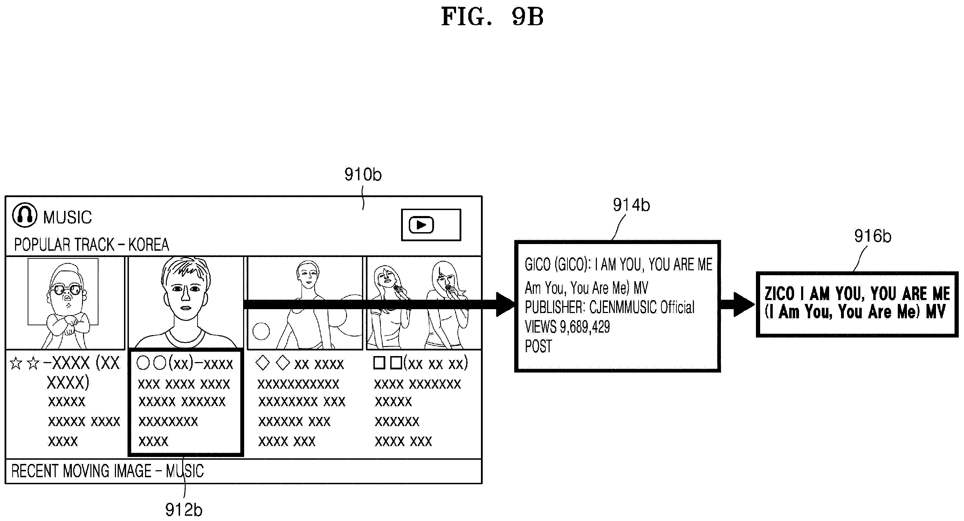

Referring to FIG. 9B, the device 100 according to an embodiment may capture a screenshot 910b corresponding to a second template screenshot determined based on the control signal. The device 100 may detect an image 912b including the content information from the captured screenshot 910b using the second template screenshot.

The device 100 according to an embodiment may read the detected image 912b and recognize text 914b representing information about the content. Also, the device 100 may use the predetermined meaning recognition model to determine information necessary to identify the content from the recognized text 914b. For example, the device 100 may select text representing a title of content included on the recognized text 914b. Also, the device 100 may compare the recognized text 914b with the predetermined meaning recognition model to correct 'gico' and 'gi', which are determined to be typographical errors, to 'zico' and 'Zl'. The device 100 may determine the title of the content based on text 916b in which the typographical errors are corrected.

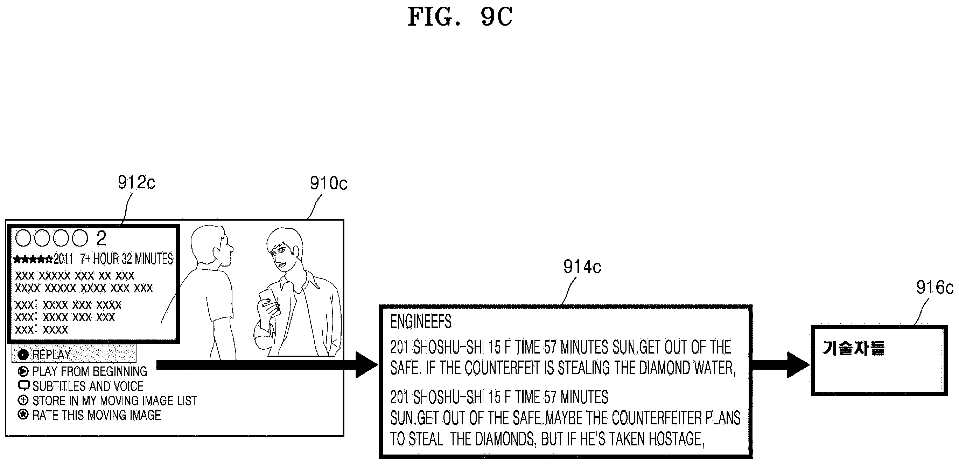

Referring to FIG. 9C, the device 100 according to an embodiment may capture a screenshot 910c corresponding to a third template screenshot determined based on the control signal. The device 100 may detect an image 912c including the content information from the captured screenshot 910c using the third template screenshot.

The device 100 according to an embodiment may read the detected image 912c and recognize text 914c representing information about the content. Also, the device 100 may use the predetermined meaning recognition model to determine the information necessary to identify the content from the recognized text 914c. For example, the device 100 may select 'engineeFs' which is text representing a title of content included on the recognized text 914c. Also, the device 100 may compare the recognized text 914c with the predetermined meaning recognition model and correct 'eF' which is determined to be a typographical error, to be 'r'.

The device 100 may determine the title of the content based on text 916c in which the typographical error is corrected.

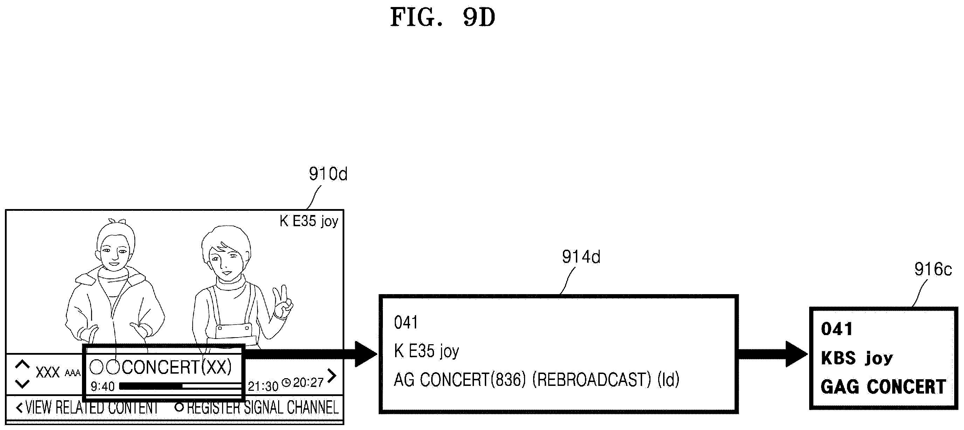

Referring to FIG. 9D, the device 100 according to an embodiment may capture a screenshot 910d corresponding to a fourth template screenshot determined based on the control signal. The device 100 may detect an image 912d including the content information from the captured screenshot 910d using the fourth template screenshot.

The device 100 according to an embodiment may read the detected image 912d to recognize text 914d representing information about the content. Also, the device 100 may use the predetermined meaning recognition model to determine information necessary to identify the content from the recognized text 914d. For example, the device 100 may select text '041', 'K E35joy', and 'gag concert' representing titles and channel information of content included on the recognized text 914d. Also, the device 100 may compare the recognized text 914d with the predetermined meaning recognition model to correct 'K E35' which is determined to be a typographical error, to 'KBS'.

The device 100 may determine a type of a channel and the titles of the content based on text 916d in which the typographical error is corrected.

The device 100 according to an embodiment may recognize the content more accurately by using the predetermined meaning recognition model as described above with reference to FIGS. 9A to 9D.

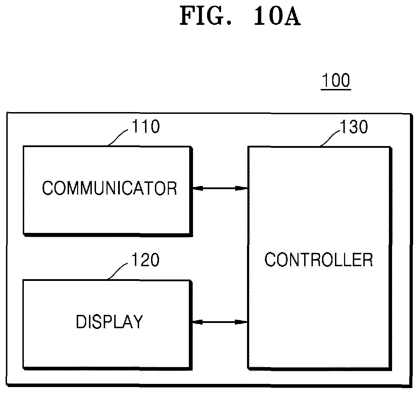

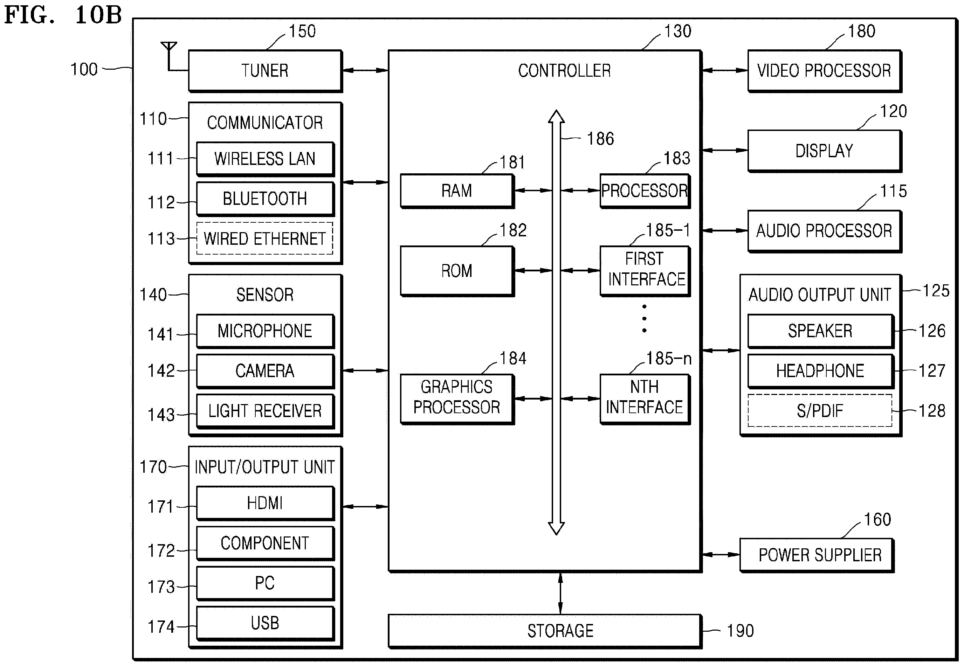

FIGS. 10A and 10B are block diagrams of the device 100 for recognizing content according to an embodiment.

Referring to FIG. 10A, the device 100 according to an embodiment may include a communicator 110, a controller 130, and a display 120. However, all illustrated components are not indispensable components. The device 100 may be implemented by more components than the components shown, and the device 100 may be implemented by fewer components.

For example, as shown in FIG. 10B, the device 100 according to an embodiment may include an audio processor 115, an audio output unit 125, a sensor 140, a tuner 150, a power supplier 160, an input/output unit 170, a video processor 180, and a storage 190, in addition to the communicator 110, the display 120, and the controller 130.

Hereinafter, the components will be described in order.

The communicator 110 may connect the device 100 to an external device (for example, an input device, a service providing device, a server, or the like) under the control of the controller 130. For example, the controller 130 may transmit/receive content to/from a service providing device connected through the communicator 110, download an application from the service providing device, or browse the web. The communicator 110 may include one of a wireless LAN 111, a Bluetooth 112, and a wired Ethernet 113 according to performance and structure of the device 100. The communicator 110 may also include a combination of the wireless LAN 111, the Bluetooth 112, and the wired Ethernet 113. The communicator 110 may receive a control signal of an input device under the control of the controller 130. The control signal may be implemented as a Bluetooth type control signal, an RF signal type control signal, or a WiFi type control signal.

The communicator 110 may further include a near field communication (for example, near field communication (NFC), not shown) and a Bluetooth low energy (BLE) (not shown) other than Bluetooth.

The communicator 110 according to an embodiment receives a control signal for controlling at least one piece of content provided by the device 100. In this case, the communicator 110 may perform a function corresponding to a function of the sensor 140, which will be described later.

The communicator 110 may transmit extracted content information to a server. The communicator 110 may also receive content viewing pattern information of a user of the device 100 determined based on the content information extracted from the server 200.

The display 120 converts a video signal, a data signal, an OSD signal, a control signal, etc. processed by the controller 130 to generate driving signals. The display 120 may be a PDP, an LCD, an OLED, a flexible display, or a 3D display. Also, the display 120 may be configured as a touch screen and used as an input device in addition to an output device.

The display 120 according to an embodiment displays the content. In the present specification, the display 120 may correspond to a screen in that the content is displayed.

The controller 130 usually controls the overall operation of the device 100. For example, the controller 130 may generally control the communicator 110, the display 120, the audio processor 115, the audio output unit 125, the sensor 140, the tuner 150, the power supplier 160, the input/output unit 170, the video processor 180, the storage 190, and the like by executing programs stored in the storage 190.

The controller 130 according to an embodiment captures a screen of the device 100 at a predetermined cycle when the control signal is received. When the captured screenshot corresponds to a template screenshot, the controller 130 extracts a character string including content information from a predetermined area of the captured screen. The controller 130 recognizes content displayed on the display 120 based on the content information included in the extracted character string.

The controller 130 according to an embodiment may determine a type of a content service providing the at least one piece of content to the device 100. The controller 130 may select the template screenshot according to the determined type of the content service.

When the captured screenshot corresponds to the template screenshot, the controller 130 according to an embodiment may stop capturing the screen on which the content is displayed. Also, the controller 130 may determine the type of the content service and a type of the control signal. The controller 130 may capture the screen of the device 100 on which the content is displayed at the predetermined cycle based on the determined type of the content service and type of the control signal.

The controller 130 according to another embodiment may determine whether the received control signal is a signal pointing the screen of the device 100 and detect a predetermined area from the pointed point on the screen. Also, the controller 130 may extract a character string including the content information from the detected area. The controller 130 may recognize the content displayed on the display 120 based on the content information.

According to another embodiment, the controller 130 may compare the extracted content information with at least one text included in a predetermined meaning recognition model and detects text corresponding to the extracted content information. Also, the controller 130 may previously set the meaning recognition model. The controller 130 may detect text having the highest similarity with the text included in the extracted content information among the at least one text included in the meaning recognition model.

The controller 130 recognizes the content displayed on the screen of the device 100 based on the detected text. For example, the controller 130 may determine the detected text as a title of the content displayed on the screen of the device 100. According to another example, the device 100 may verify the detected text based on additional information. According to another example, the device 100 may verify the detected text based on sensed voice data.

The audio processor 115 performs processing on audio data. The audio processor 115 may perform various kinds of processing such as decoding and amplification, noise filtering, and the like on the audio data. Meanwhile, the audio processor 115 may include a plurality of audio processing modules for processing audio corresponding to a plurality of contents.

The audio output unit 125 outputs audio included in a broadcast signal received through the tuner 150 under the control of the controller 130. The audio output unit 125 may output audio (e.g., voice or sound) input through the communicator 110 or the input/output unit 170. The audio output unit 125 may also output audio stored in the storage 190 under the control of the controller 130. The audio output unit 125 may include at least one of a speaker 126, a headphone output terminal 127, or a Sony/Philips Digital Interface (S/PDIF) output terminal 128. The audio output unit 125 may include a combination of the speaker 126, the headphone output terminal 127, and the S/PDIF output terminal 128.

The sensor 140 according to an embodiment may sense a user input and transmit a sensed signal to the controller 130. Also, the sensor 140 may sense user inputs for power on/off, channel selection, channel-up/down, and screen setup. Also, the sensor 140 according to an embodiment may sense a user input for moving a cursor displayed on the display 120 and a direction key input for moving a focus between candidate items. Also, the sensor 140 senses a user's voice, an image of the user, or an interaction of the user.

The microphone 141 receives a user's uttered voice. The microphone 141 may convert the received voice into an electrical signal and output the electrical signal to the controller 130.

The microphone 141 may be implemented integrally with or separately from the device 100. The separated microphone 141 may be electrically connected to an image display device 100b through the communicator 110 or the input/output unit 170. It will be readily understood by those skilled in the art that the microphone 141 may be omitted according to the performance and structure of the device 100.

A camera 142 may convert the received image into an electric signal under the control of the controller 130 and output the electric signal to the controller 130.

A light receiver 143 receives an optical signal (including the control signal) received from an external input device through an optical window (not shown) of a bezel of the display 120 or the like. The light receiver 143 may receive the optical signal corresponding to a user input (e.g., touch, pressing, touch gesture, voice, or motion) from the input device. The control signal may be extracted from the received optical signal under the control of the controller 130.

The tuner 150 may tune and select only a frequency of a channel to be received by the display device 100 among many radio wave components through amplification, mixing, and resonance of a broadcast signal received by wired or wirelessly. The broadcast signal includes audio, video and additional information (for example, EPG (Electronic Program Guide)).

The tuner 150 may receive the broadcast signal in a frequency band corresponding to a channel number (e.g., cable broadcast 506) according to a user input (e.g., the control signal received from the control device 200, for example, a channel number input, a channel up-down input, and a channel input in an EPG screen).

The tuner 150 may receive broadcast signals from various sources such as terrestrial broadcast, cable broadcast, satellite broadcast, internet broadcast, and the like. The tuner 150 may receive a broadcast signal from a source such as an analog broadcast or a digital broadcast. The broadcast signal received through the tuner 150 is decoded (for example, audio decoding, video decoding, or additional information decoding) and separated into audio, video and/or additional information. The separated audio, video, and/or additional information may be stored in the storage 190 under the control of the controller 130.

The power supplier 160 supplies power from an external power source to internal components of the device 100 under the control of the controller 130. Also, the power supplier 160 may supply power to the internal components from one or more batteries (not shown) located inside the device 100 under the control of the controller 130.

The input/output unit 170 receives video (e.g. a moving image, etc.), audio (e.g. voice, music, etc.), and additional information (e.g. EPG, etc.) from outside the device 100 under the control of the controller 130. The input/output unit 170 may include one of a high-definition multimedia interface (HDMI) port 171, a component jack 172, a PC port 173, and a USB port 174. The input/output unit 170 may include a combination of an HDMI port 171, the component jack 172, the PC port 173, and the USB port 174.

It will be readily understood by those skilled in the art that the configuration and operation of the input/output unit 170 may be variously implemented according to the embodiments.

The video processor 180 performs processing on video data received by the device 100. The video processor 180 may perform various kinds of image processing such as decoding, scaling, noise filtering, frame rate conversion, resolution conversion, and the like on the video data.

The controller 130 may include a RAM 181 that stores a signal or data input from the outside of the device 100 or is used as a storage area corresponding to various jobs performed by the device 100, an ROM 182 in which a control program for controlling the image display device 100b is stored, and a processor 183.

The processor 183 may include a graphic processing unit (not shown) for graphics processing corresponding to the video. The processor 183 may be implemented as a SoC (System On Chip) incorporating a core (not shown) and a GPU (not shown). The processor 183 may include a single core, a dual core, a triple core, a quad core, and multiple cores thereof.

The processor 183 may also include a plurality of processors. For example, the processor 183 may be implemented as a main processor (not shown) and a sub processor (not shown) operating in a sleep mode.

The graphics processor 184 generates a screen including various objects such as an icon, an image, and a text using an operator (not shown) and a renderer (not shown). The operator calculates attribute values such as a coordinate value, a shape, a size, and a color to be displayed by each of the objects according to a layout of the screen using the user input sensed through the sensor 140. The renderer generates screens of various layouts including the objects based on the attribute values calculated by the operator. The screens generated by the renderer are displayed within a display area of the display 120.

First to nth interfaces 185-1 to 185-n are connected to the various components described above. One of the first to nth interfaces 185-1 to 185-n may be a network interface connected to an external device over a network.

The RAM 181, the ROM 182, the processor 183, the graphics processor 184 and the first through nth interfaces 185-1 through 185-n may be interconnected via an internal bus 186.

The term controller in the present embodiment includes the processor 183, the ROM 182, and the RAM 181.

The storage 190 may store various data, programs, or applications for driving and controlling the device 100 under the control of the controller 130. For example, the storage 190 may store a control program for controlling the device 100 and the controller 130, an application initially provided from a manufacturer or downloaded from outside, a graphical user interface (GUI) related to the application, objects (e.g., image text, icons, buttons, etc.) for providing the GUI, user information, documents, databases, or related data.

In an embodiment, the term storage includes a memory card (e.g., micro SD card, USB memory, not shown) installed in the storage 190, the ROM 182 and the RAM 181 of the controller 130, or the device 100. Also, the storage 190 may include a nonvolatile memory, a volatile memory, a hard disk drive (HDD), or a solid state drive (SSD).

The storage 190 may include a broadcast receiving module, a channel control module, a volume control module, a communication control module, a voice recognition module, a motion recognition module, a light receiving module, a display control module, an audio control module, an external input control module, a power control module, a power control module of an external device connected wirelessly (e.g. Bluetooth), a voice database (DB), or a motion database (DB) that is not shown. The modules and database of the storage 190 that are not shown may be implemented in the form of software to perform a control function of broadcast reception by the device 100, a channel control function, a volume control function, a communication control function, a voice recognition function, a motion recognition function, a light reception control function, a display control function, an audio control function, an external input control function, a power control function, or a power control function of an external device connected wirelessly (e.g., Bluetooth). The controller 130 may perform the respective functions using the software stored in the storage 190.

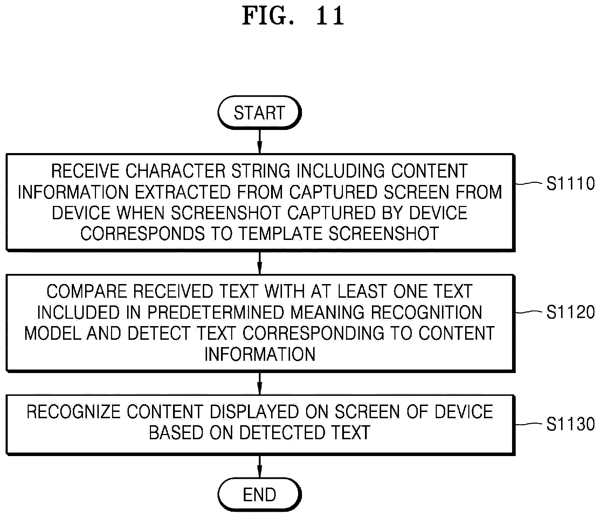

FIG. 11 is a flowchart for explaining a method performed by the meaning recognition server 200 of recognizing content provided to the device 100 according to an embodiment.

In operation S1110, the meaning recognition server 200 receives, from the device 100, a character string including content information extracted from a captured screen when a screenshot captured by the device 100 corresponds to a template screenshot.

According to an embodiment, the character string received by the meaning recognition server 200 may include text data displayed on a predetermined area corresponding to the template screenshot on the captured screenshot. For example, when the captured screenshot is a start screenshot of A content, the content information may include information about a title of the A content and a type of a channel by which the A content is provided. However, this is only an embodiment, and the content information is not limited to the above-described example.

According to another embodiment, the meaning recognition server 200 may receive additional information from the device 100 together with the character string. In this regard, the additional information may include information about a time at which the content is displayed on the device 100, a user of the device 100, a type of a content service, a size, position, and color of the text data displayed on the captured screenshot.

According to another embodiment, the meaning recognition server 200 may receive voice data sensed by the device 100 together with the content information from the device 100. In this regard, the voice data may include voice data of the user viewing the content displayed on the device 100. However, this is only an embodiment, and the meaning recognition server 200 may receive the character string and the voice data together with the above-described additional information.

In operation S1120, the meaning recognition server 200 compares the received text with at least one text included in a predetermined meaning recognition model and detects text corresponding to the content information.

The meaning recognition server 200 according to an embodiment may previously set the meaning recognition model. The meaning recognition model may include at least one text for recognizing the content from the content information received from the device 100. For example, the meaning recognition model may include the at least one text representing a title of currently provided content and a type of a channel by which the content is being provided. The meaning recognition model may also include at least one of a predetermined format pattern for each template screenshot and a probability model in which probability is calculated according to a relationship between words in the character string, to extract the content information from the character string.

Further, according to another example, the meaning recognition model may be set differently according to a device ID and a user ID. For example, when the user is a female in her twenties, the meaning recognition server 200 may select a meaning recognition model including at least one text representing a title of content preferred by the female in her twenties and a type of a channel from among a plurality of recognition models.

The meaning recognition server 200 according to an embodiment may detect text included in the character string by using a predetermined format pattern with respect to the template screenshot from the extracted character string. In this regard, the predetermined format pattern may be included in the meaning recognition model. For example, when the format pattern is set in the order of a channel name and a title name, the device 100 may detect text corresponding to the channel name and the title name from the extracted character string. Meanwhile, according to another example, the at least one text included in the extracted character string may not correspond to the predetermined format pattern of the template screenshot of the device 100. In this case, the device 100 may detect the text from the character string using a probability model that probabilistically calculates the relationship of peripheral words in the character string. For example, the device 100 may extract text that a name of an actor is A and a name of broadcast is B from a character string that A is a leading actor and B is an exclusive broadcast based on the probability model.

In operation S1130, the meaning recognition server 200 recognizes the content displayed on the screen of the device 100 based on the detected text.

The meaning recognition server 200 according to an embodiment may determine the detected text as a title of the content displayed on the screen of the device 100.

Further, according to another embodiment, the meaning recognition server 200 may verify the detected text based on the additional information received from the device 100. The text having the highest similarity with the text included in the extracted content information among at least one text included in the meaning recognition model may be detected. In this regard, the similarity may be determined according to types of consonants and vowels of the text included in the content information, a combination relation, and the like, and a matching ratio between the at least one text included in the meaning recognition model. For example, when the text included in the content information is Hungfu, the meaning recognition server 200 may detect Kungfu having the highest similarity among the at least one text included in the meaning recognition model. The meaning recognition server 200 may compare the content information received from the device 100 with the meaning recognition model to detect the text from the meaning recognition model, thereby correcting a typographical error or the like included in the received content information.

According to another embodiment, the meaning recognition server 200 may verify the detected text based on the voice data received from the device 100. For example, while Kungfu is detected as the title of the content, the meaning recognition server 200 may determine whether the received voice data indicates Kungfu and verify the detected text.

The meaning recognition server 200 according to an embodiment may repeatedly perform operation S1120 described above when it is determined that the detected text is not information suitable for recognizing the content as a result of verifying the detected text. Further, according to another example, the meaning recognition server 200 may request the device 100 to recapture the screen of the device 100.

Meanwhile, the meaning recognition server 200 according to an embodiment may transmit a content recognition result to the viewing pattern analysis server 300. In this regard, the viewing pattern analysis server 300 may determine a viewing pattern including information about a channel and a type of content frequently viewed by the user of the device 100, a content viewing time, and the like. According to an embodiment, information about the viewing pattern may be sent to a content service provider or a server of an advertisement provider.

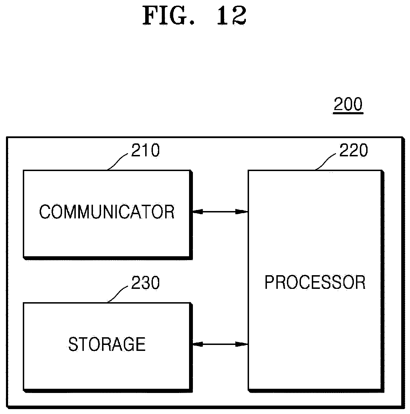

FIG. 12 is a block diagram illustrating the meaning recognition server 200 that recognizes content provided to the device 100 according to an embodiment.

Referring to FIG. 12, the meaning recognition server 200 according to an embodiment may include a communicator 210, a processor 220, and a storage 230. However, all illustrated components are not indispensable components. The meaning recognition server 200 may be implemented by greater components than the illustrated components, and the meaning recognition server 200 may be implemented by fewer components.

Hereinafter, the components will be described in order.

The communicator 210 may connect the meaning recognition server 200 to an external device (for example, the device 100, a view pattern analysis server, or the like) under the control of the processor 220. For example, the processor 220 may receive a character string including content information from the device 100 connected through the communicator 210. Also, the communicator 210 may receive content data from an external web server (not shown) at a predetermined cycle. In this regard, the content data may be used to generate a meaning recognition model. According to another example, the processor 220 may transmit recognition information of the content displayed on a screen of the device 100 to the viewing pattern analysis server (not shown) through the communicator 210.

Also, the communicator 210 according to an embodiment may receive voice data of a user sensed by the device 100. In this regard, the voice data may include voice data sensed while the user views the content displayed on the device 100.

The processor 220 usually controls the overall operation of the meaning recognition server 200. For example, the processor 220 may generally control the communicator 210, the storage 230, and the like by executing programs stored in the storage 230.

The processor 220 according to an embodiment compares a character string received through the communicator 210 with at least one text included in a predetermined meaning recognition model. Also, the processor 220 detects text corresponding to the content information from at least one text based on a comparison result. For example, the processor 220 may detect text included in the character string using a predetermined format pattern of a template screenshot from the extracted character string. Meanwhile, according to another example, the at least one text included in the extracted character string may not correspond to the predetermined format pattern of the template screenshot of the device 100. In this case, the device 100 may detect the text from the character string using a probability model that probabilistically calculates the relationship of peripheral words in the character string.

The processor 220 according to an embodiment recognizes the content displayed on the screen of the device 100 based on the detected text. According to another embodiment, the processor 220 may verify the detected text based on additional information received through the communicator 210. According to another example, when the processor 220 selects at least one candidate text having similarity equal to or greater than a threshold value as a result of comparing the extracted content information with the at least one text, the processor 220 may compare the at least one candidate text with the additional information and select either one, and thus the accuracy of content recognition may be increased.

The processor 220 according to an embodiment may recognize the content displayed on the screen of the device 100 based on the detected text and voice data of a user received through the communicator 210.

The processor 220 according to an embodiment may update the meaning recognition model based on at least one piece of content data acquired in a predetermined cycle. Also, the processor 220 according to an embodiment may select the meaning recognition model according to a profile of the user including at least one of a user's age, sex, and occupation.

The storage 230 may store various data, programs, or applications for driving and controlling the meaning recognition server 200 under the control of the processor 220. For example, the storage 230 may store at least one meaning recognition model. Also, the storage 230 may store content data received from a web server (not shown).

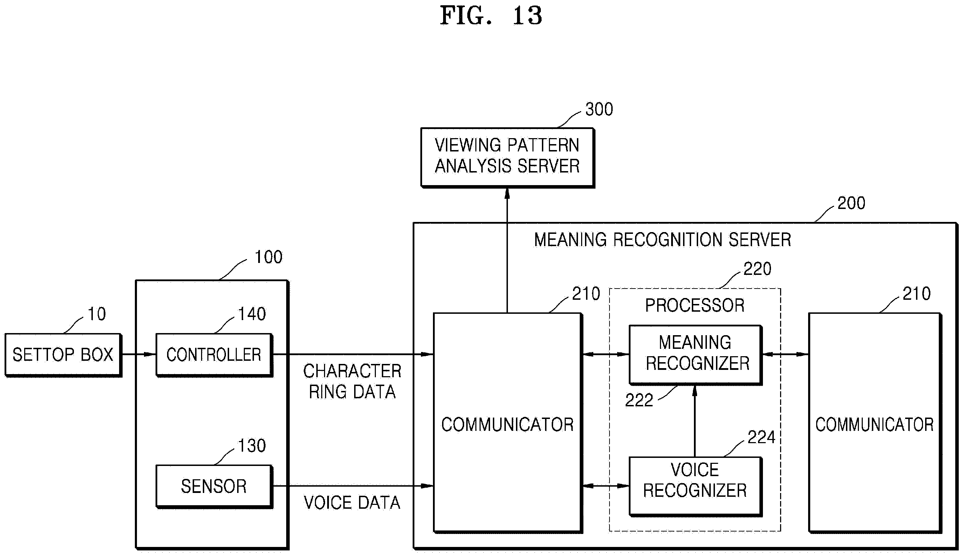

FIG. 13 is a conceptual diagram for explaining a system (hereinafter referred to as a content recognition system) that recognizes content displayed on the device 100 according to an embodiment.

The content recognition system according to an embodiment may include the device 100 and the meaning recognition server 200.

Referring to FIG. 13, the device 100 according to an embodiment may include the controller 130 and the sensor 140. It should be noted, however, that this shows only some of components necessary for explaining the present embodiment, and the components included in the device 100 are not limited to the above-described examples.

The controller 130 according to an embodiment may capture a screen of the device 100 on which the content is displayed when a control signal is received by the device 100. When a captured screenshot corresponds to a previously stored template screenshot, the controller 130 may extract a character string including content information from the captured screenshot.

Further, the controller 130 may transmit the extracted character string to the meaning recognition server 200.

The sensor 140 according to an embodiment may sense voice data of a user viewing the at least one piece of content received by the device 100. For example, the sensor 140 may sense voice data of the user selecting one of the at least one piece of content received by the device 100, voice data of the user evaluating the content displayed on the device 100, etc.

Also, the sensor 140 may transmit the voice data to the meaning recognition server 200.

The meaning recognition server 200 according to an embodiment may include the communicator 210, the processor 220, and the storage 230. It should be noted, however, that only the components necessary for explaining the present embodiment are shown, and the components included in the meaning recognition server 200 are not limited to the above-described examples.

The communicator 210 according to an embodiment may receive the character string and the voice data extracted from the device 100.

The processor 220 according to an embodiment may include a meaning recognizer 222 and a voice recognizer 224.

The meaning recognizer 222 may detect text corresponding to the content information from at least one text included in a predetermined meaning recognition model.

The voice recognizer 224 may provide a result of analyzing the received voice data to the meaning recognizer 222. Accordingly, the meaning recognizer 222 may verify the detected text by comparing the result of analyzing the voice data provided from the voice recognizer 224 with the detected text. According to another example, when a plurality of texts corresponding to the received text are detected, the meaning recognizer 222 may compare the result of analyzing the voice data with the detected plurality of texts and select any one of the detected plurality of texts.

According to an embodiment, the text detected by the meaning recognizer 222 may be transmitted to the viewing pattern analysis server 300 through the communicator 210. The viewing pattern analysis server 300 may analyze a viewing pattern of the user of the device 100 using the text received from the meaning recognition server 200 for a predetermined time.

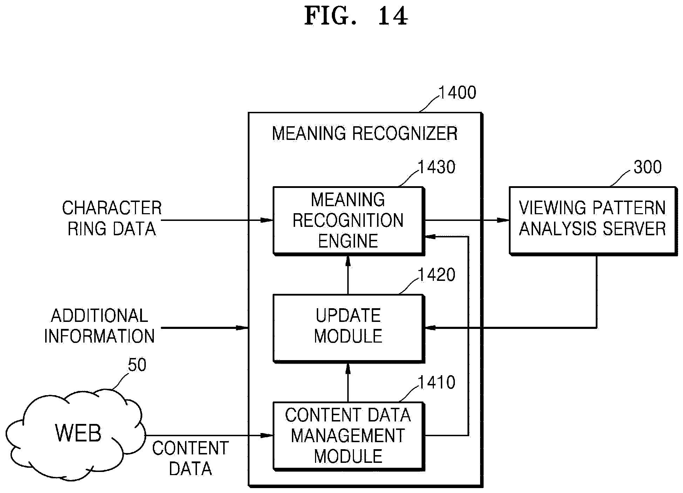

FIG. 14 is a block diagram for explaining in more detail an operation of the meaning recognizer 1400 included in the processor 220 of the meaning recognition server 200, according to an embodiment.

Referring to FIG. 14, the meaning recognizer 1400 according to an embodiment may include a content data management module 1410, an update module 1420, and a meaning recognition engine 1430. However, all illustrated components are not indispensable components. For example, functions of the illustrated components may be performed in one module, and may be performed in more modules than the illustrated components.

The content data management module 1410 according to an embodiment may receive content data from the external web server 50. For example, the content data management module 1410 may receive a type of a content providing service from the web server 50, a title of the content provided from the content providing service, contents thereof, and a type of a channel by which the content is provided, etc. from the web server 50. Also, the content data management module 1410 may transmit, to the update module 1420, content data regarding the title of the content, the type of the channel, and the like among the received content data.

The update module 1420 according to an embodiment may generate a meaning recognition model based on the content data regarding the title of the content, the type of the channel, and the like received from the content data management module 1410. The update module 1420 may also generate a meaning recognition model corresponding to the user of the device 100 using additional information received from the device 100. For example, the update module 1420 may generate a personalized meaning recognition model based on information about a user's gender, age, and age received from the device 100.

The meaning recognition engine 1430 according to an embodiment may recognize the content displayed on the screen of the device 100 using the character string received from the device 100 based on the meaning recognition model provided from the update module 1420. Also, the meaning recognition engine 1430 may extract a word that is predicted as the title of the content from the received string and then transmit the extracted word to the content data management module 1410. In this regard, the content data management module 1410 may verify whether there is a typographical error in the extracted word or whether the extracted word is appropriate to recognize the title of the content. The word verified by the content data management module 1410 may be transmitted to the viewing pattern analysis server 300.

Meanwhile, this is merely an embodiment, and when the meaning recognition engine 1430 determines that the information about the title of the content and the type of the channel by which the content is provided as derived as a result of recognizing the content is highly reliable, the meaning recognition engine 1430 may transmit the extracted word to the viewing pattern analysis server 300 without a verification process of the content data management module 1410. Meanwhile, the viewing pattern analysis server 300 may analyze a viewing pattern of the user based on a content recognition result received from the meaning recognition engine 1430. Also, the viewing pattern analysis server 300 may provide an analysis result to the update module 1420. Accordingly, the update module 1420 may update a meaning recognition model corresponding to the user of the device 100 based on the received viewing pattern analysis result.

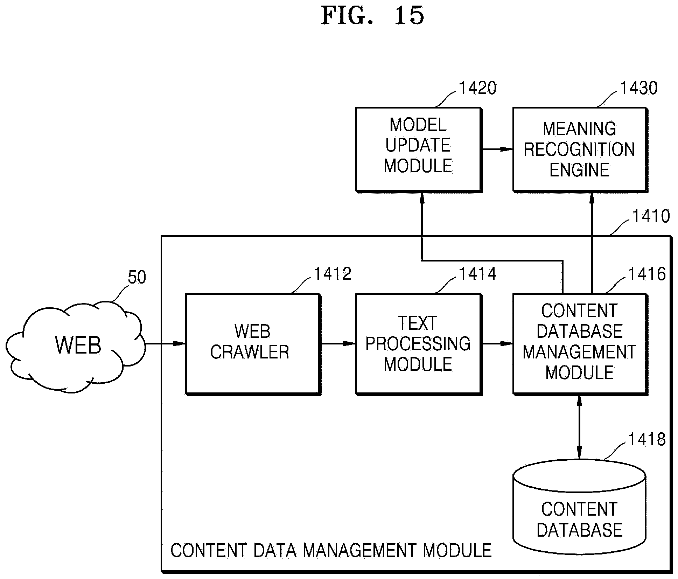

FIG. 15 is a block diagram for explaining in more detail an operation of the content data management module 1410 included in the meaning recognizer 220 of the meaning recognition server 200, according to an embodiment.

Referring to FIG. 15, the content data management module 1410 according to an embodiment may include a web crawler 1412, a text processing module 1414, a content database management module 1416 and a content database 1418. However, all illustrated components are not indispensable components. For example, functions of the illustrated components may be performed in one module and may be performed in more modules than the illustrated components.

The web crawler 1412 according to an embodiment may obtain content data from data provided by a web server. For example, the web crawler 1412 may visit a web page provided by a content service or a web page of a portal site to acquire the content data recorded in the web page.

The text processing module 1414 according to an embodiment may process the content data acquired by the web crawler 1412 into a text form. For example, the text processing module 1414 may extract text from an image of the web page obtained by web crawler 1412.

The content database management module 1416 according to an embodiment may classify the content data of the text form acquired from the text processing module 1414 according to a type of a content service and a viewing time and store the classified content data in the content database 1418.

Also, the content database management module 1416 may provide the text data of the text form to each of the update module 1420 and the meaning recognition engine 1430 described above with reference to FIG. 14.

Meanwhile, in FIG. 15, the content database 1418 is included in the content data management module 1410, but this is only an embodiment. According to another example, the content database 1418 may be included in the storage 230 described above with reference to FIG. 12.

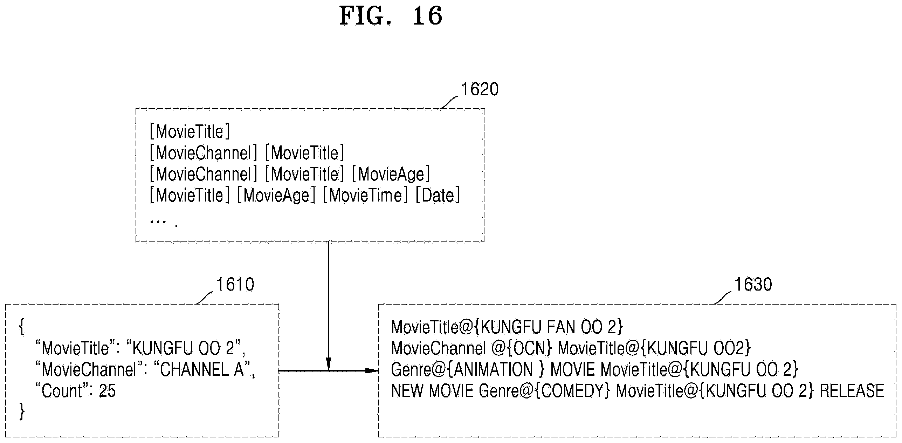

FIG. 16 is a diagram for explaining a method performed by the meaning recognition server 200 of processing a text that is a basis of a meaning recognition model based on content data 1610 of a text form according to an embodiment.

The meaning recognition server 200 according to an embodiment may detect at least one text that may recognize content from the content data 1610 of the text form. The meaning recognition server 200 may extract at least one text available for recognizing the content from the content data 1610 of the text form using a predetermined template corpus 1620. In this regard, the template corpus 1620 may include words that may be used to recognize the content. For example, a movie title, a drama title, a movie channel, and a broadcast time may be included in the template corpus 1620 according to an embodiment.

The meaning recognition server 200 according to an embodiment may classify the detected text according to a template corpus item. In a classified text 1630, the template corpus 1620 may be stored together in an index form. Also, the meaning recognition server 200 may generate a meaning recognition model based on the classified text 1630.

Meanwhile, the example described in FIG. 16 is an example of methods of generating a meaning recognition model. However, the method of generating the meaning recognition model in the present disclosure is not limited to the use of a corpus.

The method according to an embodiment may be implemented as computer commands which may be executed by various computer means, and recorded on a non-transitory computer-readable recording medium. The non-transitory computer-readable recording medium may include program commands, data files, data structures, or a combination thereof. The program commands recorded on the non-transitory computer-readable recording medium may be specially designed and constructed for the present disclosure or may be known to and usable by one of ordinary skill in a field of computer software. Examples of the non-transitory computer-readable medium include magnetic media such as hard discs, floppy discs, or magnetic tapes, optical media such as compact disc-read only memories (CD-ROMs), or digital versatile discs (DVDs), magneto-optical media such as floptical discs, and hardware devices that are specially configured to store and carry out program commands, such as ROMs, RAMs, or flash memories. Examples of the program commands include a high-level programming language that may be executed by a computer using an interpreter as well as a machine language code made by a complier.

The device described herein may include a processor, a memory for storing program data to be executed by the processor, a permanent storage such as a disk drive, a communications port for handling communications with external devices, and user interface devices, including a display, keys, etc. When software modules are involved, these software modules may be stored as program commands or computer readable code executable by the processor on a non-transitory computer-readable media such as read-only memory (ROM), random-access memory (RAM), CD-ROMs, magnetic tapes, floppy disks, and optical data storage devices. The computer readable recording media may also be distributed over network coupled computer systems so that the computer readable code is stored and executed in a distributed fashion. This media may be read by the computer, stored in the memory, and executed by the processor.

For the purposes of promoting an understanding of the principles of the disclosure, reference has been made to the embodiments illustrated in the drawings, and specific language has been used to describe these embodiments. However, no limitation of the scope of the disclosure is intended by this specific language, and the disclosure should be construed to encompass all embodiments that would normally occur to one of ordinary skill in the art.

The disclosure may be described in terms of functional block components and various processing steps. Such functional blocks may be realized by any number of hardware and/or software components configured to perform the specified functions. For example, the disclosure may employ various integrated circuit components, e.g., memory elements, processing elements, logic elements, look-up tables, and the like, which may carry out a variety of functions under the control of one or more microprocessors or other control devices. Similarly, where the elements of the disclosure are implemented using software programming or software elements, the disclosure may be implemented with any programming or scripting language such as C, C++, Java, assembler, or the like, with the various algorithms being implemented with any combination of data structures, objects, processes, routines or other programming elements. Functional aspects may be implemented in algorithms that execute on one or more processors. Furthermore, the disclosure may employ any number of conventional techniques for electronics configuration, signal processing and/or control, data processing and the like. The words "mechanism" and "element" are used broadly and are not limited to mechanical or physical embodiments, but may include software routines in conjunction with processors, etc.

The particular implementations shown and described herein are illustrative examples of the disclosure and are not intended to otherwise limit the scope of the disclosure in any way. For the sake of brevity, conventional electronics, control systems, software development and other functional aspects of the systems (and components of the individual operating components of the systems) may not be described in detail. Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device. Moreover, no item or component is essential to the practice of the disclosure unless the element is specifically described as "essential" or "critical". It will be recognized that the terms "comprising," "including," and "having," as used herein, are specifically intended to be read as open-ended terms of art.

The use of the terms "a" and "an" and "the" and similar referents in the context of describing the disclosure (especially in the context of the following claims) are to be construed to cover both the singular and the plural. Furthermore, recitation of ranges of values herein are merely intended to serve as a shorthand method of referring individually to each separate value falling within the range, unless otherwise indicated herein, and each separate value is incorporated into the specification as if it were individually recited herein. Finally, the steps of all methods described herein may be performed in any suitable order unless otherwise indicated herein or otherwise clearly contradicted by context. The use of any and all examples, or exemplary language (e.g., "such as") provided herein, is intended merely to better illuminate the disclosure and does not pose a limitation on the scope of the disclosure unless otherwise claimed. Numerous modifications and adaptations will be readily apparent to those of ordinary skill in this art without departing from the spirit and scope of the disclosure.

## Claims

1. A method, performed by a server, of recognizing content, the method comprising:
when a captured screenshot of a device corresponds to a template screenshot, receiving content information extracted from the captured screenshot from the device;
detecting a text corresponding to the extracted content information by comparing the received content information with at least one text included in a predetermined meaning recognition model; and
recognizing content displayed on a screen of the device based on the detected text.

2. The method of claim 1, further comprising receiving voice data of a user who views content of the device,
wherein the recognizing of the content comprises: recognizing the content displayed on the screen of the device based on the received voice data of the user.

3. The method of claim 1, wherein the detecting of the text comprises:
calculating a probability value that each of the at least one text corresponds to the extracted content information by comparing the extracted content information with the at least one text; and
detecting any one of the at least one text based on the calculated probability value.

4. The method of claim 1, further comprising: when the detected text does not exist, receiving, from the device, a character string comprising the content information extracted from another captured screenshot corresponding to the template screenshot.

5. The method of claim 1, wherein the recognizing of the content further comprises: changing information of the extracted content information, which does not correspond to the detected text, based on the detected text.

6. The method of claim 1, further comprising:
transmitting a result of recognizing the content to a viewing pattern analysis server; and
receiving, from the viewing pattern analysis server, viewing pattern history information of a user of the device generated by the viewing pattern analysis server based on the result.

7. A device comprising:
a communicator configured to receive at least one piece of content;
a display configured to display any one of the at least one piece of content; and
a processor configured to
capture a screen of the device when a control signal for controlling the at least one piece of content is received,
when a captured screenshot corresponds to a template screenshot, extract a character string comprising content information from a predetermined area of the captured screenshot,
compare the extracted character string with at least one text included in a predetermined meaning recognition model,
detect a text corresponding to the content information, and
recognize content displayed on the screen of the device based on the detected text.

8. A server for recognizing content, the server comprising:
a communicator configured to, when a captured screenshot of a device corresponds to a template screenshot, receive a character string comprising content information extracted from the captured screenshot from the device; and
a processor configured to compare the received content information with at least one text included in a predetermined meaning recognition model to detect a text corresponding to the content information, and recognize content displayed on a screen of the device based on the detected text.

9. The server of claim 8,
wherein the communicator is further configured to receive voice data of a user who views content of the device, and
wherein the processor is further configured to recognize the content displayed on the screen of the device based on the received voice data of the user.

10. The server of claim 8, wherein the processor is further configured to compare the extracted content information with the at least one text and calculate a probability value that each of the at least one text corresponds to the extracted content information, and detect any one of the at least one text based on the calculated probability value.

11. The server of claim 8, wherein, when the detected text does not exist, the processor is further configured to receive a character string comprising the content information extracted from another captured screenshot corresponding to the template screenshot from the device.

12. The server of claim 8, wherein the processor is further configured to change information of the extracted content information, which does not correspond to the detected text, based on the detected text.

13. The server of claim 8, wherein the communicator is configured to transmit a result of recognizing the content to a viewing pattern analysis server and receive viewing pattern history information of the user of the device generated by the viewing pattern analysis server based on the result.

14. A computer-readable recording medium on which a program for executing the method of claim 1 is recorded.
